(19) Europäisches Patentamt
European Patent Office
Office européen des brevets

(11) **EP 4 625 019 A1**

(12) **EUROPÄISCHE PATENTANMELDUNG**

(43) Veröffentlichungstag:
**01.10.2025 Patentblatt 2025/40**

(21) Anmeldenummer: **24166441.6**

(22) Anmeldetag: **26.03.2024**

(51) Internationale Patentklassifikation (IPC):
**G02B 7/36** (2021.01)　　　**G06T 7/00** (2017.01)
**G02B 21/24** (2006.01)　　　**G06N 3/02** (2006.01)

(52) Gemeinsame Patentklassifikation (CPC):
**G02B 7/36; G06N 3/02; G06T 7/0012;**
G02B 21/244; G06T 2207/10064; G06T 2207/30024

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **EUROIMMUN Medizinische Labordiagnostika AG**
**23560 Lübeck (DE)**

(72) Erfinder:
• **HOCKE, Jens**
**23560 Lübeck (DE)**

• **KRAUTH, Jens**
**23560 Lübeck (DE)**
• **GERLACH, Stefan**
**23560 Lübeck (DE)**
• **KRAUSE, Christopher**
**23560 Lübeck (DE)**
• **HAASE, Roland**
**23560 Lübeck (DE)**
• **HAHN, Melanie**
**23560 Lübeck (DE)**
• **VOIGT, Jörn**
**23560 Lübeck (DE)**

(54) **VERFAHREN ZUR BESTIMMUNG EINES FOKUSSIERUNGSMASSES EINES MIKROSKOPBILDES**

(57) Vorgeschlagen wird ein Verfahren zur Bestimmung eines Fokussierungsmaßes eines Mikroskopbildes, wobei das Mikroskopbild ein Bild eines biologischen Zellsubstrates repräsentiert, wobei das Verfahren aufweist: Bereitstellen des Mikroskopbildes, Bestimmen eines Gradientenbildes auf Basis des Mikroskopbildes, Prozessieren von Bildinformationen des Gradientenbildes und von Bildinformationen des Mikroskopbildes mittels eines neuronalen Netzes zur Bestimmung des Fokussierungsmaßes, wobei das Fokussierungsmaß eine Qualität einer Fokussierung in dem Mikroskopbild bezüglich einer Zellsubstratebene des Zellsubstrates indiziert.

Fig. 2

EP 4 625 019 A1

**Beschreibung**

Auf dem Gebiet der Diagnostik bzw. medizinischen Diagnostik ist es eine übliche Vorgehensweise, ein biologisches Zellsubstrat einer Patientenprobe, vorzugsweise einer flüssigen Patientenprobe in Form von verdünntem Serum, auszusetzen, um eine Bindung von spezifischen Antikörpern der Patientenprobe an bestimmte Bereiche bzw. bestimmte Antigene des biologischen Zellsubstrats zu detektieren.

Hierbei wird vorzugsweise das biologische Zellsubstrat zunächst mit der flüssigen Patientenprobe inkubiert, sodass spezifische Antikörper an bestimmte Antigene des Zellsubstrats binden können. In einem weiteren Schritt wird dann vorzugsweise eine Inkubation mit einem sekundären Antikörper vorgenommen, welcher beispielsweise ein sogenannter Anti-Human Antikörper ist und welcher vorzugsweise mit einem Fluoreszenzfarbstoff, beispielsweise FITC, markiert ist. Solche sekundären Antikörper können dann an primäre Antikörper binden, welche bereits an bestimmte Antigene des Substrats gebunden haben. Wird dann das Substrat mit Anregungsstrahlung bestrahlt, beispielsweise mittels Licht einer blauen LED, so wird der Fluoreszenzfarbstoff angeregt und emittiert dann eine Fluoreszenzstrahlung, vorzugsweise von einer grünen Färbung. Mittels eines Mikroskopes kann dann ein Mikroskopbild einer solchen Fluoreszenzstrahlung aufgenommen werden. Das Mikroskopbild kann also somit vorzugsweise ein Fluoreszenzbild, insbesondere ein Immunfluoreszenzbild, sein. Das Mikroskopbild ist also insbesondere ein Immunfluoreszenzbild eines biologischen Zellsubstrates, welches mit einer Patientenprobe, potenziell aufweisend primäre Antikörper, sowie mit sekundären Antikörpern, welche mit einem Fluoreszenzfarbstoff markiert sind, inkubiert wurde.

Im Anschluss an das Erfassen eines solchen Mikroskopbildes kann dann vorzugsweise eine Detektion von spezifischen Mustern bzw. Fluoreszenzmustern in dem Mikroskopbild erfolgen, um für einen behandelnden Arzt eine entsprechende Information zu bereitzustellen, auf deren Basis er beurteilen bzw. abschätzen kann, ob der Patient möglicherweise ein bestimmtes Krankheitsbild aufweist.

Eine solche Detektion von Fluoreszenzmustern kann vorzugsweise rechnergestützt bzw. durch eine Software, insbesondere eine Software mit künstlicher Intelligenz, erfolgen.

Alternativ zu einem Immunfluoreszenzbild kann es sich bei einem Mikroskopbild aber auch um ein sogenanntes Auflichtbild eines biologischen Zellsubstrates handeln. Auch hier können bestimmte Muster rechner- bzw. softwaregestützt detektiert werden. Vorzugsweise kann es sich bei einem Mikroskopbild um ein Durchlichtbild des biologischen Zellsubstrates handeln.

Ein solches biologisches Zellsubstrat ist vorzugsweise ein Organschnitt oder ein Zellausstrich von biologischen Zellen.

Eine Erfassung von Mikroskopbildern eines biologischen Substrates ist aus dem Stand der Technik hinreichend bekannt. Ebenso gibt es vielfältige Algorithmen für eine Detektion von bestimmten Zellmustern bzw. Algorithmen zum Feststellen, ob bestimmte Zellmuster in Form von Zellfärbungen oder vorzugsweise Immunfluoreszenzmustern vorliegen. Derartige Algorithmen sind beispielsweise sowohl aus der EP4016082A1 als auch aus der EP3971827A1 der Anmelderin bekannt.

Eine rechner- bzw. softwaregestützte Detektion von Fluoreszenzmustern ermöglicht einen Automatisierungsgrad bei der Bestimmung eines Maßes, welches ein Vorliegen eines bestimmten Fluoreszenzmusters indiziert. Derartige Automatisierungsaspekte gewinnen im Zuge der Labordiagnostik in größeren Laborbetrieben immer mehr an Bedeutung, insbesondere aus Gründen der Wirtschaftlichkeit.

Voraussetzung für den Einsatz einer solchen softwaregestützten Detektion eines Zellmusters ist es, dass das entsprechende Mikroskopbild, welches einem Algorithmus bzw. einer Software zur weiteren Verarbeitung bereitgestellt wird, hinreichend gut fokussiert ist in Bezug auf eine Zellsubstratebene des Zellsubstrates.

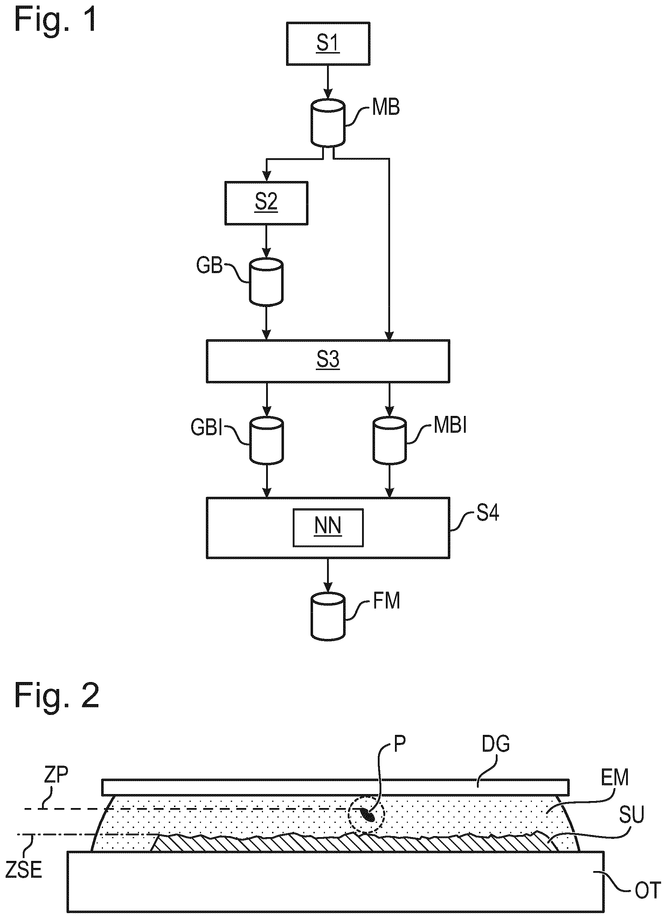

Die Figur 2 zeigt ein biologisches Zellsubstrates SU, welches auf bzw. an einem Objektträger OT positioniert ist. Das Zellsubstrat SU befindet sich im Wesentlichen innerhalb einer Zellsubstratebene ZSE. Vorzugsweise ist das Zellsubstrat SU mittels eines Eindeckmediums EM eingedeckt, oberhalb dessen sich ein Deckglas DG befindet. Das Deckmedium EM und das Deckglas DG sind also nur vorzugsweise präsent. Das biologische Zellsubstrat befindet sich also vorzugsweise auf einem Objektträger, besonders bevorzugt ist das Zellsubstrat mit einem Deckglas abgedeckt.

Ein Mikroskopbild des Zellsubstrates SU muss dann in der Weise aufgenommen werden, dass die Fokussierungsebene des Mikroskopes mit der Zellsubstratebene ZSE zusammenfällt bzw. nicht wesentlich hiervon abweicht. Entsprechende Mikroskopierverfahren und Vorrichtungen sind beispielsweise aus der EP3642660A1 oder der EP3671309A1 der Anmelderin bekannt. Auch wenn die dort beschriebenen Verfahren im Wesentlichen hinreichend robust sind, kann es bei der Bereitstellung eines Zellsubstrates SU zu Problemfällen bzw. Artefakten kommen, insbesondere durch eine Präsenz eines Objektes P, welches ein Partikel sein kann. Das Partikel P kann ein Haar sein, ein Staubkorn, besonders bevorzugt ein Kekskrümel oder aber beispielsweise ein auskristallisierter Bestandteil des Fluoreszenzfarbstoffes, beispielsweise ein FITC-Kristall. In dem bevorzugten Fall, dass ein Deckmedium EM und Deckglas DG verwendet werden, kann das Objekt P auch eine Luftblase sein.

Die Präsenz eines Objektes P kann dazu führen, dass eine Mikroskopvorrichtung eine Fokussierungsebene wählt, welche nicht mit der Zellsubstratebene ZSE des Substrates SU zusammenfällt, sondern aufgrund der Präsenz des Objektes P die Fokussierungsebene in einer oberhalb der Ebene ZSE befindlichen Ebene ZP, welche beispielsweise zu dem Objekt P korrespondiert, wählt. Daher kann es vorkommen, dass eine Qualität einer Fokussierung des Mikroskopbildes bezogen auf das Zellsubstrat SU nicht hinreichend ist, was man insbesondere auch als ein unscharfes Mikroskopbild bezeichnen kann.

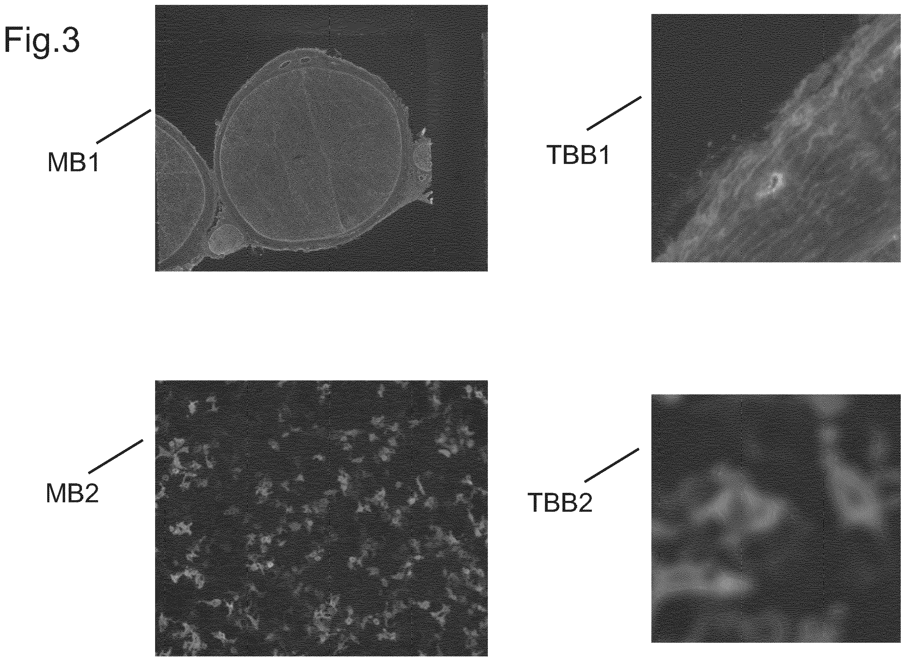

Die Figur 3 zeigt ein erstes Mikroskopbild MB1, bei welchem eine hinreichende Qualität einer Fokussierung des Mikroskopbildes bezüglich einer Zellsubstratebene gegeben ist. Dargestellt ist ferner ein Teilbildbereich TBB1 des Mikroskopbildes MB1, welchem entnommen werden kann, dass eine hinreichende Qualität einer Fokussierung vorliegt.

Ein weiteres, zweites Mikroskopbild MB2 ist ebenfalls dargestellt mit einem entsprechenden Teilbildbereich TBB2 in einer vergrößerten Darstellung. Hier kann erkannt werden, dass möglicherweise keine hinreichende Qualität einer Fokussierung in dem Mikroskopbild gegeben ist.

Es ergibt sich für den Fachmann die Aufgabe festzustellen, ob eine Qualität einer Fokussierung eines Mikroskopbildes bezüglich einer Zellsubstratebene eines Zellsubstrates hinreichend ist. Es kann vorzugsweise entschieden werden, ob das entsprechende Mikroskopbild in einem anschließenden Schritt durch einen entsprechenden Algorithmus verarbeitet werden soll, um ein Vorliegen bestimmter Muster zu detektieren. Ist bereits eine hinreichende Qualität einer Fokussierung des Mikroskopbildes nicht gegeben und kann dies festgestellt werden, dann kann vorzugsweise entschieden werden, keine algorithmus- bzw. softwaregestützte Analyse des Mikroskopbildes zum Zwecke eine Detektion von bestimmten Mustern durchzuführen, da mit hoher Wahrscheinlichkeit ein Fehlergebnis zu erwarten ist. Ferner kann vorzugsweise aus einer Information, dass keine hinreichende Qualität einer Fokussierung des Mikroskopbildes gegeben ist, darauf geschlossen werden, dass im Laborbetrieb möglicherweise Bedingungen herrschen, welche eine Einbringung von Objekten, wie das Objekt P aus Figur 2, ermöglichen und daher Maßnahmen ergriffen werden, um derartige Fehlfälle bzw. Artefakte zu vermeiden.

Vorgeschlagen wird daher ein erfindungsgemäßes Verfahren zur Bestimmung eines Fokussierungsmaßes eines Mikroskopbildes, wobei das Mikroskopbild ein Bild eines biologischen Zellsubstrates repräsentiert und wobei das Verfahren folgende Schritte aufweist: Bereitstellen eines Mikroskopbildes, Bestimmen eines Gradientenbildes auf Basis des Mikroskopbildes, Prozessieren von Bildinformation des Gradientenbildes und von Bildinformationen des Mikroskopbildes mittels eines neuronalen Netzes zur Bestimmung des Fokussierungsmaßes, wobei das Fokussierungsmaß eine Qualität einer Fokussierung in dem Mikroskopbild bezüglich einer Zellsubstratebene des Zellsubstrates indiziert.

Das Fokussierungsmaß kann vorzugsweise eine klare Ja-Nein-Aussage sein, bevorzugt ein boolescher Wert der Wertemenge Null oder Eins sein, welcher eine Aussage "fokussiert" oder "nicht fokussiert" indiziert. Besonders bevorzugt kann das Fokussierungmaß ein Konfidenzmaß als ein Skalarwert aus einem Werteintervall sein, wobei das Konfidenzmaß insbesondere in einem Werteintervall von 0 bis 1 liegen kann.

Das Gradientenbild ist insbesondere ein Kantenbild, welches durch Filterung des Mikroskopes mittels eines Gradientenfilters bzw. eines Kantenfilters bestimmt wird. Das Filter ist insbesondere ein zweidimensionales Filter, vorzugsweise ein Sobel-Filter oder ein Laplacian of Gaussian-Filter.

Einer oder mehrere Vorteile des erfindungsgemäßen Verfahrens, welche möglicherweise erreicht werden können, werden nun unter Darlegung einzelner Aspekte im Näheren erläutert.

Wie zuvor unter Bezug auf die Figur 2 erläutert, kann durch eine Präsenz eines Objektes P in einer anderen Ebene als der Zellsubstratebene ein Fehlerfall vorliegen, sodass möglicherweise das Mikroskopbild in der Weise aufgenommen wird, dass eine Fokusebene mit einer Ebene ZP des Objektes P zusammenfällt und eben nicht mit der eigentlich relevanten Zellsubstratebene ZSE. Für das Feststellen einer Fokussierung bzw. eines Fokussierungsgrades eines Mikroskopbildes sind aus dem Stand der Technik Verfahren bekannt, bei welchen aus einem Mikroskopbild ein Gradientenbild ermittelt wird und wobei dann lediglich eine Bildinformation des Gradientenbildes ausgewertet wird, um festzustellen, ob hinreichend große bzw. starke Gradientenwerte im Gradientenbild präsent sind. Hierdurch wird dann üblicherweise in dem Fall auf eine korrekte Fokussierungs des Bildes abgestellt, dass Gradienteninformationen in dem Gradientenbild hinreichend starke Werte annehmen. Derartige Verfahren laufen jedoch Gefahr, möglicherweise lediglich auf Gradientenwerte in einem Gradientenbild abzustellen, welche sich aufgrund einer Fokussierung des Mikroskopbildes auf Kantenbereiche eines Objektes P, siehe Figur 2, ergeben können. Würde ein solches Verfahren unter alleiniger Auswertung eines Gradientenbildes vorgehen, so könnte eine Präsenz eines solchen Objektes P dazu führen, dass auch in einem Gradientenbild entsprechende Gradientenwerte, welche mögliche scharfe Kantenbereiche repräsentieren, vorhanden sind, da die Randbereiche bzw. Kantenbereiche des Objektes P auch in einem Gradientenbild entsprechende Gradientenwerte hinreichender Intensität generieren würden. Daher besteht bei Verfahren, welche lediglich eine Gradientenbildinformation auswerten, die Gefahr, fälschlicherweise ein Mikroskopbild, bei welchem auf eine Ebene ZP eines Objektes P fokussiert wurde, siehe Figur 2, darauf geschlossen wird, dass das Bild bzw. Mikroskopbild hinreichend fokussiert ist.

Das hier vorgeschlagene erfindungsgemäße Verfahren ist jedoch gegenüber dem Stand der Technik vorteilhaft, da gemäß des vorgeschlagenen Verfahrens ein Bildverständnis des neuronalen Netzes bezüglich tatsächlicher Bildinformationen des Mikroskopbildes vorgesehen bzw. ermöglicht wird. Das neuronale Netz ist insbesondere ein neuronales Netz, welches auf Basis von Mikroskopbildern und Gradientenbildern vortrainiert wurde für den Zweck einer Feststellung, ob eine Qualität einer Fokussierung in dem Mikroskopbild bezüglich einer Zellsubstratebene des Zellsubstrates vorliegt.

Somit berücksichtigt das hier vorgeschlagene Verfahren sowohl eine Bildinformation des Mikroskopbildes als auch eine Gradienteninformation des Gradientenbildes.

Es wird also durch eine gemeinsame Auswertung von Bildinformationen des Mikroskopbildes und auch von Bildinformationen des Gradientenbildes quasi für eine Auswertung von Gradienteninformationen eine Nebenbedingung bezüglich vorliegender Bildinformationen des Mikroskopbildes geschaffen.

Würde beispielsweise eine Menge mehrerer Mikroskopbilder des gleichen Substrates vorliegen, wobei die Mikroskopbilder mit unterschiedlichen Fokussierungsebenen aufgenommen wurden, so würde man gemäß des Standes der Technik dann jenes Mikroskopbild auswählen, dessen Gradientenbild Gradienteninformationen aufweist, welche am dominantesten sind und dann auf diese Entscheidung vertrauen müssen. Das vorgeschlagene Verfahren ermöglicht es jedoch, dass ein einzelnes Mikroskopbild dem Verfahren präsentiert wird und hinsichtlich einer hinreichenden Fokussierung bewertet wird unter Berücksichtigung sowohl der Gradientenbildinformationen als auch der Mikroskopbildinformationen durch das neuronale Netz.

Vorteilhafte Ausführungsformen der Erfindung sind Gegenstand der abhängigen Patentansprüche und werden in der folgenden Beschreibung unter teilweise Bezugnahme auf die Figuren näher erläutert.

Das Verfahren weist ferner vorzugsweise weitere Schritte auf: Identifizieren mehrerer Gradienten-Teilbilder des Gradientenbildes, Identifizieren mehrerer Mikroskop-Teilbilder des Mikroskopbildes auf Basis der Gradienten-Teilbilder, wobei ein jeweiliges Mikroskop-Teilbild des Mikroskobildes zu einem jeweiligen Gradienten-Teilbild des Gradientenbildes korrespondiert sowie Prozessieren der Gradienten-Teilbilder und der Mikroskop-Teilbilder mittels eines neuronalen Netzes zur Bestimmung des Fokussierungsmaßes.

Vorzugsweise weist das Verfahren ferner auf: Identifizieren mehrerer Gradienten-Teilbilder des Gradientenbildes mittels Identifizieren von mehreren Bildpositionen in dem Gradientenbild, welche eine hohe Gradientenpräsenz indizieren.

Vorzugsweise erfolgt ein Selektieren der Gradienten-Teilbilder aus dem Gradientenbild auf Basis der identifizierten Bildposition.

Das Verfahren weist ferner vorzugsweise weitere Schritte auf: Aufteilen des Gradientenbildes in eine Menge von Gradientenbildbereichen nach einem vorgegebenen Aufteilungsschema sowie Identifizieren der mehreren Gradienten-Teilbilder des Gradientenbildes auf Basis der Gradientenbildbereiche.

Das Verfahren weist ferner vorzugsweise auf: jeweiliges Prozessieren jeweiliger Teilbild-Tupel durch das neuronale Netz, wobei ein jeweiliges Teilbild-Tupel ein jeweiliges Gradienten-Teilbild und ein dazu korrespondierendes, jeweiliges Mikroskop-Teilbild aufweist.

Vorzugsweise wird das Fokussierungsmaß auf Basis der jeweiligen Prozessierungsergebnisse der jeweiligen Prozessierung der jeweiligen Teilbild-Tupel bestimmt.

Das Verfahren weist ferner vorzugsweise auf: Bestimmen eines adaptierten Mikroskopbildes auf Basis des Mikroskopbildes sowie Prozessieren von Bildinformationen des Gradientenbildes, Bildinformationen des Mikroskopbildes und Bildinformationen des adaptierten Mikroskopbildes mittels eines neuronalen Netzes zur Bestimmung des Fokussierungsmaßes, wobei das Fokussierungsmaß eine Qualität einer Fokussierung in dem Mikroskopbild bezüglich einer Zellsubstratebene des Zellsubstrates indiziert.

Vorzugsweise ist das Mikroskopbild ein Fluoreszenzbild, insbesondere ein Immunfluoreszenzbild, des biologischen Zellsubstrates oder ein Auflichtbild des biologischen Zellsubstrates.

Das Mikroskopbild ist insbesondere ein Immunfluoreszenzbild eines biologischen Zellsubstrates, welches mit einer Patientenprobe, potenziell aufweisend primäre Antikörper, sowie mit sekundären Antikörpern, welche mit einem Fluoreszenzfarbstoff markiert sind, inkubiert wurde.

Vorzugsweise ist das biologische Zellsubstrat ein Organschnitt oder ein Zellausstrich von biologischen Zellen.

Vorgeschlagen wird ferner eine Recheneinheit, welche ausgebildet ist, die Schritte auszuführen: Entgegennehmen eines Mikroskopbildes, welches ein Bild eines biologischen Zellsubstrates repräsentiert, ferner Bestimmen eines Gradientenbildes auf Basis des Mikroskopbildes sowie Prozessieren von Bildinformationen des Gradientenbildes und Bildinformationen des Mikroskopbildes mittels eines neuronalen Netzes zur Bestimmung eines Fokussierungsmaßes, wobei das Fokussierungsmaß eine Qualität einer Fokussierung in dem Mikroskopbild bezüglich einer Zellsubstratebene des Zellsubstrates indiziert.

Vorgeschlagen wird ferner eine Datennetzwerkvorrichtung, aufweisend eine Datenschnittstelle zum Entgegennehmen eines Mikroskopbildes, welches ein Bild eines biologischen Zellsubstrates repräsentiert, und welche eine erfindungsgemäße Recheneinheit aufweist.

Vorgeschlagen wird ferner ein Computerprogrammprodukt, umfassend Befehle, die bei der Ausführung des Computerprogrammproduktes durch einen Computer diesen veranlassen, ein Verfahren durchzuführen, aufweisend: Entgegennehmen eines Mikroskopbildes, welches ein Bild eines biologischen Zellsubstrates repräsentiert, Bestimmen eines Gradientenbildes auf Basis des Mikroskopbildes sowie Prozessieren von Bildinformationen des Gradientenbildes und Bildinformationen des Mikroskopbildes mittels eines neuronalen Netzes zur Bestimmung eines Fokussierungsmaßes, wobei das Fokussierungsmaß eine Qualität einer Fokussierung in dem Mikroskopbild bezüglich einer Zellsubstratebene des Zellsubstrates indiziert.

Vorgeschlagen wird ferner ein Datenträgersignal, welches das Computerprogrammprodukt überträgt.

Im Folgenden wird die Erfindung in einer speziellen Ausführungsform ohne Beschränkung des allgemeinen Erfindungsgedankens anhand der Figuren näher erläutert. Dabei zeigen:

Figur 1 Schritte einer bevorzugten Ausführungsform des erfindungsgemäßen Verfahrens,

Figur 2 ein biologisches Zellsubstrat auf einem Objektträger,

Figur 3 beispielhafte Mikroskopbilder sowie dazugehörige Teilbildbereiche,

Figur 4 bevorzugte Schritte zur Bestimmung von Gradiententeilbildern eines Gradientenbildes sowie Mikroskopteilbildern eines Mikroskopbildes,

Figur 5 Bevorzugte Schritte zur Identifikation von Bildpositionen in einem Gradientenbild,

Figur 6A ein vorgegebenes Aufteilungsschema zum Aufteilen eines Gradientenbildes,

Figur 6B bevorzugte Schritte zum Identifizieren von Gradiententeilbildern,

Figur 7 bevorzugte Schritte zum Prozessieren von Teilbild-Tupel durch ein neuronales Netz,

Figur 8 bevorzugte Schritte zum Bestimmen eines adaptierten Mikroskopbildes und eines Prozessierens von Bildinformationen eines Gradientenbildes, eines Mikroskopbildes und eines adaptierten Mikroskopbildes zur Bestimmung eines Fokussierungsmaßes,

Figur 9 bevorzugte Schritte zum Prozessieren von Teilbild-Tupel, wobei ein Teilbild-Tupel ein Gradiententeilbild, ein Mikroskopteilbild sowie ein Teilbild eines adaptierten Mikroskopbildes aufweist,

Figur 10A eine vorgeschlagene Recheneinheit,

Figur 10B eine vorgeschlagene Datennetzwerkvorrichtung,

Figur 10C ein vorgeschlagenes Computerprogrammprodukt,

Figur 10D ein vorgeschlagenes Datenträgersignal,

Figur 11 bevorzugte Schritte zur Bestimmung eines Fokussierungsmaßes,

Figur 12 bevorzugte Schritte zur Bestimmung von Gradiententeilbildern,

Figur 13 Experimentalergebnisse,

Figur 14 beispielhafte Mikroskopbilder sowie dazugehörige Teilbildbereiche.

Die Figur 1 zeigt eine bevorzugte Ausführungsform eines erfindungsgemäßen Verfahrens zur Bestimmung eines Fokussierungsmaßes FM eines Mikroskopbildes MB.

In einem Schritt S1 wird das Mikroskopbild bereitgestellt. In einem Schritt S2 wird auf Basis des Mikroskopbildes MB ein Gradientenbild GB ermittelt. Dies erfolgt vorzugsweise unter Verwendung eines Sobel-Filters.

Ein solches Filter kann vorzugsweise als ein Gradientenfilter oder als ein Kantenfilter bezeichnet werden.

In einem Schritt S3 werden dann Bildinformationen des Gradientenbildes GBI extrahiert sowie Bildinformationen des Mikroskopbildes MBI.

In einem Schritt S4 werden dann unter Verwendung eines neuronalen Netzes NN Bildinformationen GBI des Gradientenbildes GB und Bildinformationen MBI des Mikroskopbildes MB prozessiert zur Bestimmung des Fokussierungsmaßes FM, wobei das Fokussierungsmaß eine Qualität einer Fokussierung in dem Mikroskopbild bezüglich einer Zellsubstratebene des Zellsubstrates indiziert.

Wie bereits zuvor ausgeführt, ist das erfindungsgemäße und hier vorgeschlagene Verfahren vorteilhaft, da das neuronale Netz nicht nur Informationen eines Grandientenbildes GBI auswertet, sondern eben auch gleichzeitig Informationen des Mikroskopbildes MBI, sodass das neuronale Netz NN insbesondere ein Bildverständnis bezüglich tatsächlicher Bildinformationen des Mikroskopbildes MB aufweist.

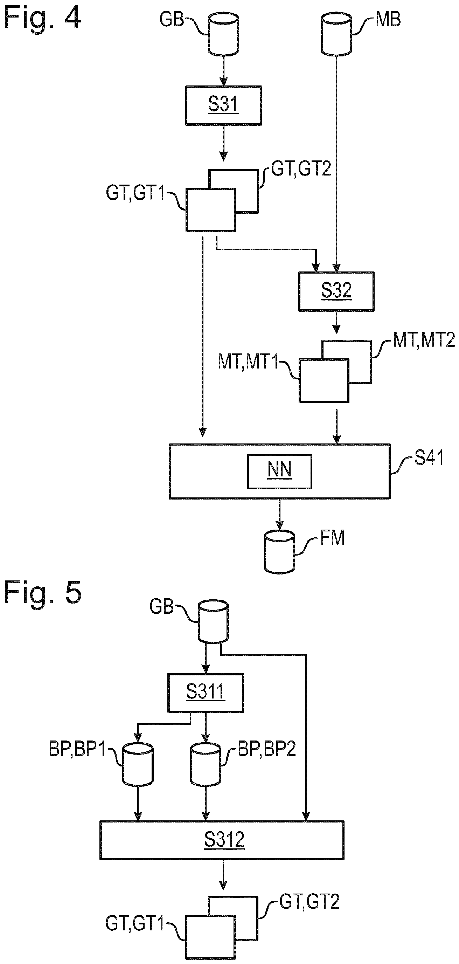

Die Figur 4 zeigt weitere bevorzugte Schritte zur Bestimmung des Fokussierungsmaßes FM.

In einem Schritt S31 erfolgt ein Identifizieren von Gradiententeilbildern GT des Gradientenbildes GB. Vorzugsweise werden zwei Gradiententeilbilder GT1, GT2 bestimmt.

Auf Basis der Gradiententeilbilder GT werden dann in einem Schritt S31 mehrere Mikroskopteilbilder MT des Mikroskopbildes MB auf Basis der Gradiententeilbilder GT identifiziert. Vorzugsweise werden auch hier zwei Mikroskopteilbilder MT1, MT2 identifiziert.

Die Gradiententeilbilder GT können als eine Gradientenbildinformation bzw. eine Bildinformation des Gradientenbildes GBI aus Figur 1 aufgefasst werden. Die Mikroskopteilbilder MT können als Bildinformationen des Mikroskopbildes MBI aus Figur 1 aufgefasst werden.

Ein jeweiliges Mikroskopteilbild MT1 des Mikroskopbildes MB korrespondiert zu einem jeweiligen Gradiententeilbild GT1 des Gradientenbildes GB. Gleiches gilt eben auch für eine Korrespondenz des Mikroskopteilbildes MT2 zu dem Gradiententeilbild GT2.

Es kann insbesondere festgehalten werden, dass durch die Schritte S31 und S32 ein Identifizieren und ein Selektieren mehrerer Gradiententeilbilder GT aus dem Gradientenbild GB erfolgt sowie ferner ein Identifizieren und Selektieren mehrerer Mikroskopteilbilder MT aus dem Mikroskopbild MB.

In dem Schritt S41 wird dann mittels des neuronalen Netzes NN eine Prozessierung der Gradiententeilbilder GT und der Mikroskopteilbilder MT zur Bestimmung des Fokussierungsmaßes FM vorgenommen.

Die bevorzugten Schritte aus der Figur 4 ermöglichen den Vorteil, dass eine Detektion von Bildregionen mit starken Intensitätsunterscheidungen mittels Betrachtung der Gradientenbildinformationen ermöglicht wird. Hierbei ist es insbesondere vorteilhaft, dass nicht sämtliche Bildinformationen des Mikroskopbildes und auch des gesamten Gradientenbildes durch das neuronale Netz NN verarbeitet werden müssen, sondern nur bestimmte, identifizierte bzw. selektierte Bildinformationen von identifizierten und selektierten Gradiententeilbildern GT und Mikroskopteilbildern MT. Eine Auswertung sämtlicher Bildinformationen eines gesamten Mikroskopbildes und eines gesamten Gradientenbildes würde eine sehr hohe Komplexität des neuronalen Netzes NN erfordern. Durch Auswahl bzw. Identifikation und Selektion bestimmter Teilbilder des Gradientenbildes und des Mikroskopbildes wird eine Komplexität des neuronalen Netzes NN deutlich reduziert. Insbesondere kann eine relevante Untermenge an Bildinformationen, gegeben durch die Gradiententeilbilder GT und die Mikroskopteilbilder MT, einer Prozesszierung bzw. Auswertung durch das neuronale Netz NN zur Bestimmung des Fokussierungsmaßes FM unterzogen werden.

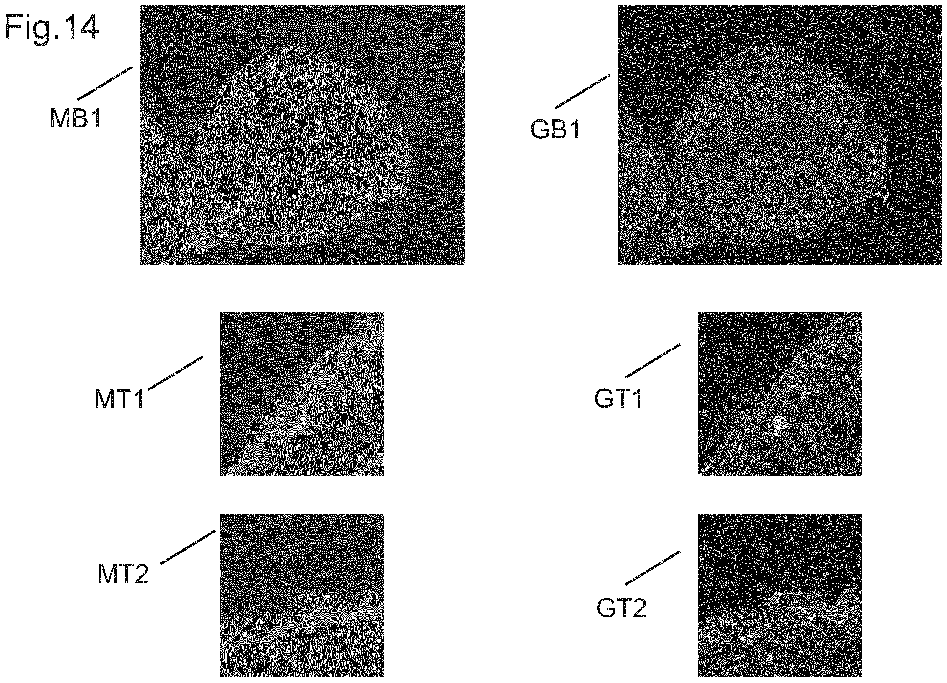

Beispielhaft zeigt die Figur 14 noch einmal das Mikroskopbild MB1 aus der Figur 3 sowie ein dazugehöriges Gradientenbild GB. Ferner zeigt die Figur 14 identifizierte und selektierte Gradiententeilbilder GT1, GT2, welche aus dem Gradiententeilbild GB selektiert wurden und vergrößert dargestellt sind. Ferner zeigt die Figur 14 hierzu korrespondierende, jeweilige Mikroskopteilbilder MT1, MT2. Wie aus der Figur 14 ersichtlich, weisen sowohl das Mikroskopbild MB1 als auch das Gradientenbild GB1 Bildbereiche auf, welche im Wesentlichen dunkel sind und als sogenannter Hintergrund bezeichnet werden. Derartige Bildereiche weisen wenig Informationen bezüglich einer hinreichenden Qualität an einer Fokussierung des Mikroskopbildes auf.

Dadurch, dass nicht sämtliche Bildinformationen des Mikroskopbildes MB, MB1 und des Gradientenbildes GB, GB1 in dem hier vorgeschlagenen Verfahren gemäß einer besonderen Ausführungsform verwendet werden, sondern eben nur bestimmte Teilbilder GT1, GT2 des Gradientenbildes und dazu korrespondierende Teilbilder1 MT1, MT2 des Mikroskopbildes, kann mittels des neuronalen Netzes auf jene Teilbildbereiche abgestellt werden, welche relevante Bildinformationen bereitstellen. Hierdurch kann eine Zuverlässigkeit bzw. Robustheit, insbesondere Leistungsfähigkeit, des neuronalen Netzes zur Bestimmung des Fokussierungsmaßes erhöht werden.

Die Figur 5 zeigt weitere bevorzugte Schritte zum Identifizieren von Gradiententeilbildern. Das Gradiententeilbild GB wird in einem Schritt S311 analysiert. Hierbei erfolgt ein Identifizieren und insbesondere Selektieren der mehreren Gradiententeilbilder GT mittels eines Identifizierens von mehreren Bildpositionen in dem Gradientenbild GB, welche eine hohe Gradientenpräsenz indizieren. Vorzugsweise erfolgt dann ein Selektieren der Gradiententeilbilder GT aus dem Gradientenbild GB in einem Schritt S312 auf Basis der identifizierten Bildpositionen BP.

Bezugnehmend auf das Beispiel aus der Figur 14 ist es möglich, Bildpositionen des Gradientenbildes auszuwählen, welche eine hohe Gradientenpräsenz, hier helle Bildintensitäten, aufweisen. Durch Identifikation entsprechender Bildpositionen in dem Gradientenbild GB1 können dann die Gradiententeilbilder GT1 und GT2 identifiziert und extrahiert bzw. selektiert werden.

Diese Berücksichtigung von Bildpositionen mit hoher Gradientenpräsenz ist daher vorteilhaft, da nur solche Gradiententeilbilder dazu korrespondierende Mikroskopteilbilder einer Analyse durch das neuronale Netz unterworfen werden, welche potenziell eine Untermenge an Bildinformationen der gesamten Bilder in Form des Gradientenbildes GB1 und des Mikroskopbildes MB1 repräsentieren, wobei die identifizierten und selektierten Teilbilder sich eben am ehesten für eine Ermittlung eines Schärfegrades bzw. eines Fokussierungsmaßes des Mikroskopbildes MB1 eignen.

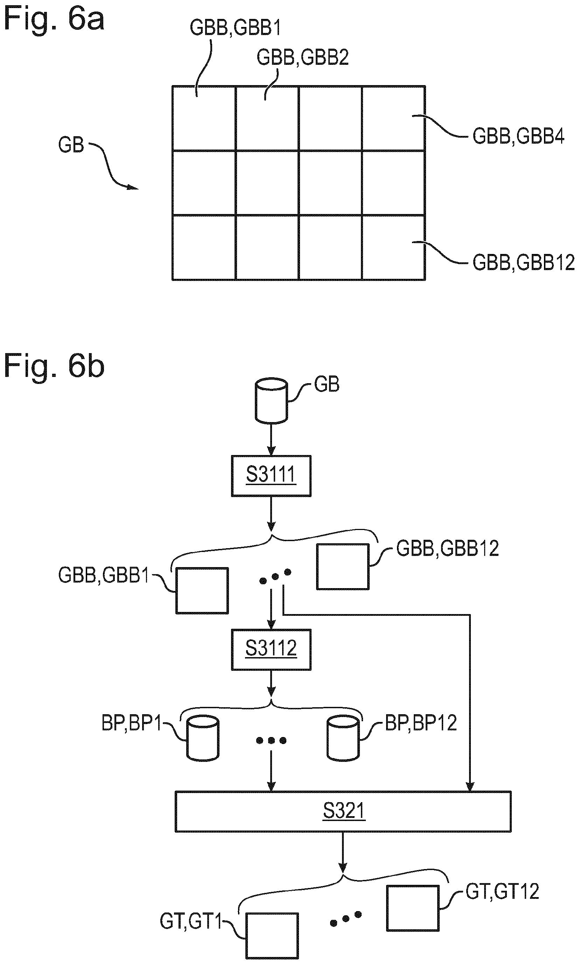

Die Figur 6A zeigt ein vorgegebenes Aufteilungsschema, insbesondere ein fest vorgegebenes Aufteilungsschema, zum Aufteilen des Gradientenbildes GB in eine Menge von Gradientenbildbereichen GBB. Gemäß dem hier dargestellten Beispiel werden mehrere Gradientenbildbereiche GBB in Form der Gradientenbildbereiche GBB1 bis GBB12 mit einer beispielhaften Anzahl von zwölf Gradientenbildbereichen GBB verwendet.

Die Figur 6B zeigt weiter bevorzugte Schritte zum Identifizieren der Gradiententeilbilder GT. Hierbei erfolgt in einem Schritt S3111 die zuvor erläuterte Aufteilung des Gradientenbildes GB in eine Menge von Gradientenbildbereichen GBB, in diesem Beispiel für zwölf unterschiedliche Gradientenbildbereiche GBB1 bis GBB12. Derartige Gradientenbildbereiche GBB können auch als sogenannte Patches bezeichnet werden.

Es erfolgt dann in einem Schritt S3112 für einen jeweiligen Gradientenbildbereich GBB eine jeweilige Identifikation einer jeweiligen, entsprechenden Bildposition BP, welche eine hohe Gradientenpräsenz indiziert. Daher werden für die hier beispielhaften Gradientenbildbereiche GBB1 bis GBB12 jeweils entsprechenden Bildpositionen BP1 bis BP12 jeweilig identifiziert.

Auf Basis einer jeweiligen Bildposition BP erfolgt in einem Schritt S321 eine jeweilige Identifikation und insbesondere Selektion eines jeweiligen Gradiententeilbildes GT für einen jeweiligen Gradiententeilbildbereich GBB. Es wird also, ohne Beschränkung der Allgemeinheit, in diesem Beispiel ein Gradiententeilbild GT1 in dem Gradientenbildbereich GBB1 identifiziert und aus diesem selektiert. Gleiches erfolgt zur Bestimmung des Gradiententeilbildes GT12 auf Basis des Gradientenbildbereiches ist GB12.

Das fest vorgegebene Aufteilungsschema ist insbesondere ein fest vorgegebenes räumliches Aufteilungsschema zum Aufteilen des Gradientenbildes GB in Gradientenbildbereiche GBB. Es erfolgt also insbesondere ein Identifizieren der mehreren Gradiententeilbilder GT des Gradientenbildes GB auf Basis der Gradientenbildbereiche GBB, wobei vorzugsweise ein jeweiliges Gradiententeilbild GT1 auf Basis eines jeweiligen Gradientenbildbereiches GBB1 identifiziert und insbesondere selektiert wird.

Die hier dargestellte Vorgehensweise aus der Figur 6B ist insbesondere vorteilhaft, da durch Aufteilung des Gradientenbildes in Gradientenbildbereiche und jeweilige Identifikation der Gradiententeilbilder jeweils in den jeweiligen Gradientenbildbereichen eine räumliche Verteilung der Gradiententeilbilder über das Gradientenbild ermöglicht bzw. vorzugsweise erzwungen wird. Hierdurch wird es vermieden, dass nicht eine bestimmte Bildregion des Gradientenbildes mit starker Bildschärfe dominiert und so aus einer solchen Bildregion dann Gradiententeilbilder identifiziert bzw. selektiert werden. Würde beispielsweise ein dominantes Partikel, wie vorzugsweise ein Kekskrümel eines Kekses, welcher von einem medizinischtechnischen Assistenten im Laborbereich gegessen wurde, auf dem biologischen Substrat präsent sein, so könnte ein solches Objekt bzw. Partikel eine besonders starke Gradientenbildinformation bzw. Gradientenbildintensität in dem Gradientenbild hervorrufen, welche stärker als jede andere Gradientenbildintensität hervorgerufen durch das Substrat selber sein könnte. Da nicht nur eine ganz bestimmte, hier möglicherweise fälschlicherweise identifizierte, Region des Objektes bzw. Partikels dann später durch die Gradiententeilbilder und entsprechende Mikroskopteilbilder ausgewählt werden soll, um diese dann dem neuronalen Netz zuzuführen, sondern eben auch Bildinformationen von Gradiententeilbildern und Mikroskopteilbildern aus anderen Regionen des Gradientenbildes und des Mikroskopbildes durch das neuronale Netz analysiert werden sollen, ist die hier vorgeschlagene Aufteilung des Gradientenbildes in eine Menge von Gradientenbildbereichen zur Bestimmung der Gradiententeilbilder vorteilhaft. Durch eine derartige Patchstruktur wird sichergestellt, dass Teilbildinformationen aus unterschiedlichen Bildregionen in eine Analyse des neuronalen Netzes zur Ermittlung des Fokussierungsmaßes einfließen.

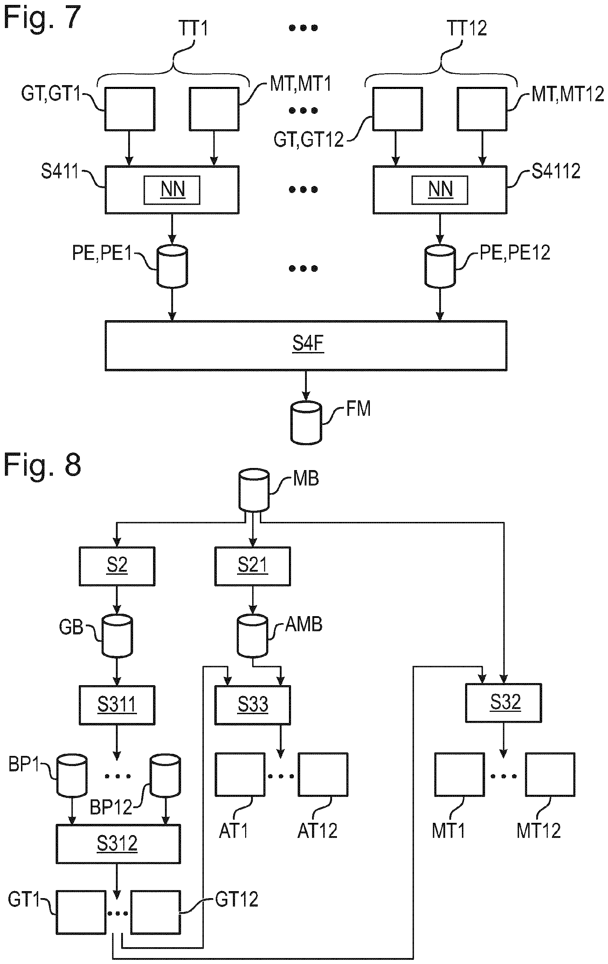

Die Figur 7 zeigt weitere bevorzugte Schritte. Vorzugsweise erfolgt mittels des neuronalen Netzes NN ein jeweiliges Prozessieren jeweiliger Teilbild-Tupel, wobei ein jeweiliges Teilbild-Tupel ein jeweiliges Gradiententeilbild und ein dazu korrespondierendes, jeweiliges Mikroskopteilbild aufweist. Dieses Prozessieren ist insbesondere ein jeweiliges, separates Prozessieren jeweiliger Teilbild-Tupel durch das jeweils gleiche neuronale Netz NN.

Figur 7 zeigt hierzu ein Teilbild-Tupel TT1 aufweisend das Gradiententeilbild GT1 sowie das Mikroskopteilbild MT1. In einem Schritt S411 werden das Gradiententeilbild GT1 und das Mikroskopteilbild MT1 des Teilbild-Tupels TT1 gleichzeitig durch das neuronale Netz NN prozessiert. Separat hiervon wird in einem Schritt S4112 durch das gleiche neuronale Netz eine Prozessierung des Gradiententeilbildes GT12 und des Mikroskopteilbildes MT12 des Teilbild-Tupels TT12 prozessiert.

Die Prozessierung des Teilbild-Tupels TT1 ergibt ein Prozessierungsergebnis PE1. Eine Prozessierung des Teilbild-Tupels TT12 ergibt ein Prozessierungsergebnis PE12. Beides sind Prozessierungsergebnisse PE.

Auf Basis der jeweiligen Prozessierungsergebnisse PE1, ..., PE12 der jeweiligen Teilbild-Tupel TT1, ..., TT12 wird dann an einem Schritt S4F das Fokussierungsmaß FM bestimmt.

Die hier vorgeschlagene Vorgehensweise ist vorteilhaft, da das neuronale Netz speziell darauf trainiert sein kann, um gleichzeitig lediglich die Bildinformationen des Gradiententeilbildes und des Mikroskopteilbildes eines einzelnen Teilbild-Tupels zu prozessieren. Hierdurch kann das neuronale Netz NN insbesondere in seiner Komplexität reduziert sein, da nicht alle Gradiententeilbilder GT1, ..., GT12 sowie alle Mikroskopteilbilder MT1, ..., MT12 gleichzeitig durch das neuronale Netz NN prozessiert werden müssen. Ein Gradiententeilbild und ein Mikroskopteilbild eines Teilbild-Tupels werden also insbesondere gemeinsam und insbesondere gleichzeitig durch das neuronale Netz NN verarbeitet.

Eine solche gleichzeitige Verarbeitung eines Gradiententeilbildes und eines Mikroskopteilbildes eines Teilbild-Tupels lenkt quasi das das neuronale Netz NN mittels der Gradienteninformation des Gradiententeilbildes, damit insbesondere in dem Mikroskopteilbild des Teilbild-Tupels auf solche Bildstrukturen abgestellt wird, welche an Bildpositionen mit signifikanten Gradientenintensitätswerten des Gradiententeilbildes präsent sind.

Vorzugsweise erfolgt ferner ein Bestimmen eines adaptierten Mikroskopbildes auf Basis des Mikroskopbildes. Die Figur 8 zeigt hierzu einen Schritt S21 zur Generierung eines adaptierten Mikroskopbildes AMB auf Basis des Mikroskopbildes MB. Hierfür kann beispielsweise das Mikroskopbild MB in seinen Intensitätswerten unter Verwendung eines Skalierungsfaktors in seiner Helligkeit bzw. Intensität angepasst werden.

Die Figur 8 zeigt ferner den zuvor beschriebenen Schritt S2 zur Bestimmung des Gradientenbildes GB sowie den zuvor unter Bezug auf die Figur 5 beschriebenen Schritt S311 zur Identifikation von Bildpositionen BP1, ..., BP12, auf deren Basis dann Gradiententeilbilder GT1, ..., GT12 im Schritt S312 identifiziert und selektiert werden können. Ferner zeigt die Figur 8 im Schritt S32, bereits beschrieben unter Bezug auf Figur 4, gemäß welchem auf Basis der Gradiententeilbilder GT1, ..., GT12jeweilige, korrespondierende Mikroskopteilbilder MT1, ..., MT12 identifiziert und selektiert werden können. Auf Basis der Gradiententeilbilder GT1, ..., GT12 werden dann in einem Schritt S33, analog zu dem Schritt S32, aus dem adaptierten Mikroskopbild AMB entsprechende Teilbilder des adaptierten Mikroskopbildes AT1, ..., AT12 identifiziert und selektiert. Diese Teilbilder des adaptierten Mikroskopbildes AT1, ..., AT12 können dann also als Bildinformationen des adaptierten Mikroskopbildes aufgefasst werden.

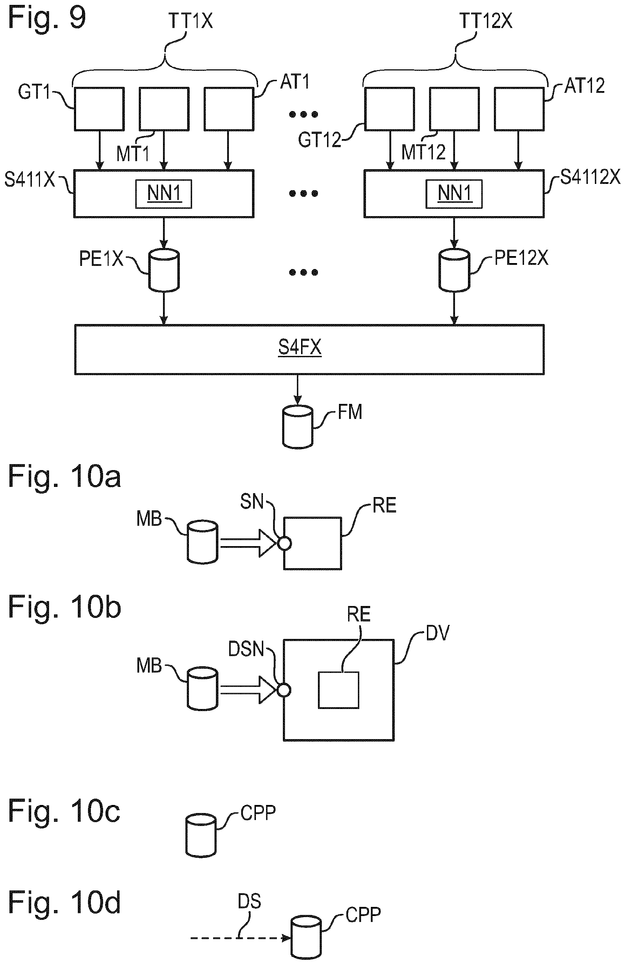

Die Figur 9 zeigt ein Prozessieren von Bildinformationen des Gradientenbildes, Bildinformationen des Mikroskopbildes und Bildinformationen des adaptierten Mikroskopbildes mittels des neuronalen Netzes NN zur Bestimmung des Fokussierungsmaßes FM. Hierbei erfolgt eine Prozessierung jeweiliger Teilbild-Tupel TT1X, ..., TT12X, welche sich von den Teilbild-Tupeln TT1X, ..., TT12X aus der Figur 7 dadurch unterscheiden, dass ein jeweiliges Teilbild-Tupel TT1X, TT12X nicht nur ein Gradiententeilbild GT1 bzw. GT12 und ein jeweiliges Mikroskopteilbild MT1 bzw. MT12 aufweist, sondern ferner auch ein jeweiliges Teilbild des adaptierten Mikroskopbildes AT1 bzw. AT12.

In jeweiligen, separaten Prozessierungsschritten S411X, ..., S4112X kann dann eine Ermittlung jeweiliger Prozessierungsergebnisse PE1X, ..., PE12X erfolgen, auf deren Basis in einem abschließenden Schritt SF4X dann das Fokussierungsmaß FM bestimmt werden kann.

Der Vorteil der hier vorgeschlagenen Vorgehensweise erlaubt ein robusteres Verfahren zum Bestimmen des Fokussierungsmaßes FM, da weitere Bildinformationen des adaptierten Mikroskopbildes Eingang in die Analyse durch das neuronale Netz NN finden.

Wie zuvor erwähnt, ist das Mikroskopbild vorzugsweise ein Immunfluoreszenzbild. Das hier vorgeschlagene Verfahren ist insbesondere für Immunfluoreszenzbilder vorteilhaft, da bei derartigen Immunfluoreszenzbildern es dazu kommen kann, dass keine oder nur eine geringe Bindung von Antikörpern an Antigene und damit auch keine oder nur eine geringe Bindung von einem Fluoreszenzfarbstoff an das biologische Substrat vorliegen kann, sodass nur eine geringe Bildintensität in dem Immunfluoreszenzbild als das Mikroskopbild präsent ist. Das hier vorgeschlagene Verfahren zur Bewertung der Qualität eines Fokussierungsmaßes des Mikroskopbildes ist in einem solchen Fall für ein Immunfluoreszenzbild in einem sogenannten "Negativfall" (wenig Bildintensität) vorteilhaft, da klassische Bildverarbeitungsverfahren bei geringen Bildintensitäten häufig nicht performant sind, um hinreichend Bildstrukturen in dem Mikroskopbild bzw. den Gradientenbild zu detektieren. Hier ist die Verwendung eines neuronalen Netzes für eine gemeinsame Analyse des Mikroskopbildes und dessen Bildinformation und auch des Gradientenbildes und dessen Bildinformation verlässlicher.

Unter Bezug auf die Figuren 6A und 6B wurde eine Prozessierung zur Bestimmung der Gradiententeilbilder GT unter Verwendung eines vorgegebenen Aufteilungsschemas zur Aufteilung des Gradientenbildes GB dargelegt.

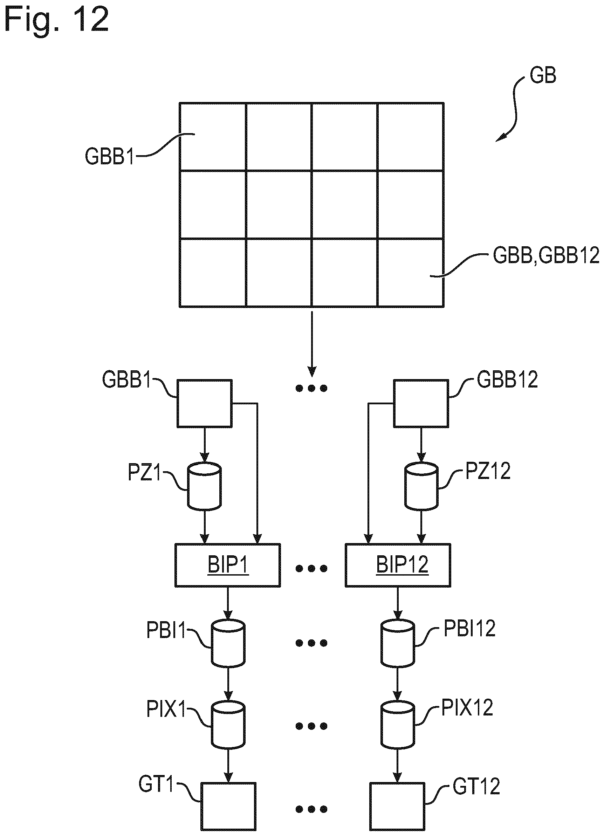

Figur 12 zeigt hierzu weitere Details. Das Gradientenbild GB wird unter Verwendung des vorgegebenen Aufteilungsschemas in entsprechende Gradientenbildbereiche GB1, ..., GB12 aufgeteilt, welche auch als sogenannte Patches bezeichnet werden können. Für einen Gradientenbildbereich GBB1 wird dann ein entsprechender Perzentilwert PZ1 der Bildintensitätswerte in dem Gradientenbildbereich GBB1 ermittelt. Gleiches erfolgt für die weiteren Gradientenbildbereiche, wie den Gradientenbildbereich GBB12, zur Bestimmung eines entsprechenden Perzentilwertes PZ12.

Ein Gradientenbildbereich GBB1 kann dann umgewandelt werden in einen binären Bildbereich BIP1 unter Verwendung des entsprechenden Perzentilwertes PZ1 als ein Schwellenwert für eine 0/1-Entscheidung. Ein entsprechender binärer Bildbereich BIP1 kann dann dahingehend analysiert werden, dass alle Pixelpositionen bzw. Pixel, für welche der entsprechende Wert des binären Bildes BIP1 den Wert 1 annimmt, in eine Menge von Pixelpositionen PBIP1 überführt wird. Entsprechendes kann für einen jeweiligen binären Bildbereich, wie zum Beispiel BIP12, erfolgen zur Gewinnung von Pixelmengen bzw. Pixelpositionen entsprechender Menge PBIP12.

Aus einer Menge von Pixelpositionen PBIP1 kann dann zufällig ein einzelnes Pixel mit einer Pixelposition PIX 1 ausgewählt werden, sodass eine einzelne Pixelposition ausgewählt wurde, welche in dem entsprechenden zuvor gebildeten Gradientenbildbereich GBB1 liegt. Um eine solche Pixelposition PIX1 herum kann dann ein entsprechender Ausschnitt bzw. eine Region of Interest ROI als ein Gradiententeilbild herum gebildet werden, um aus dem entsprechenden Gradientenbildbereich GBB1 bzw. dem Gradientenbild GB ein entsprechendes Gradiententeilbild GT1 herauszuselektieren bzw. in dem Gradientenbild GB zu identifizieren.

Entsprechendes kann auch erfolgen für einen weiteren Gradientenbildbereich GBB12, für welchen ein binäres Bild BIP12 ermittelt wird mit einer entsprechenden Menge an Pixeln PBIP12, welche den Wert 1 annehmen, sodass ein einzelnes Pixel bzw. eine einzelne Pixelposition PIX12 zufallsbasiert aus der Menge der Pixelposition PBIP12 ausgewählt werden kann. Auf Basis des hier identifizierten Textes bzw. der Pixelposition PIX12 kann dann eine entsprechende Region of Interest drum herumgelegt werden zur Identifikation und Selektion des Gradiententeilbildes GT12 aus dem Gradientenbildbereich GBB12 bzw. den Gradientenbild GB.

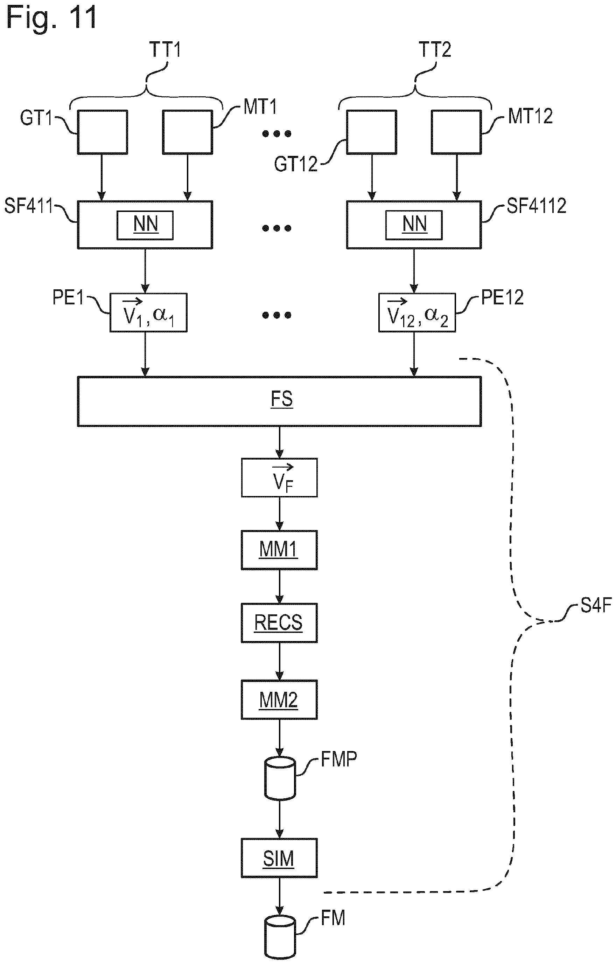

Figur 11 zeigt vorzugsweise ausgeführte Schritte zur Bestimmung des Fokussierungsmaßes FM auf Basis der Teilbild-Tupel TT1, ..., TT12 für ein Beispiel von zwölf Teilbild-Tupeln bzw. zwölf Teilbildbereichen in dem Gradientenbild und dem Mikroskopbild. Wie bereits zuvor unter Bezug auf die Figur 7 erwähnt, wird ein Teilbild-Tupel TT1 mittels eines neuronalen Netzes NN prozessiert, um ein Prozessierungsergebnis PE1 zu bestimmen. Entsprechendes wird für weitere Teilbild-Tupel, wie zum Beispiel das Teilbild-Tupel TT12 separat durchgeführt, um ein entsprechendes Prozessierungsergebnis PE12 zu bestimmen.

Das neuronale Netz NN ist vorzugsweise ein sogenanntes Mobile-Net in Form eines neuronalen Netzes mit einem Encodierpfad.

Die hier dargestellte Verarbeitung der Teilbild-Tupel TT1, ..., TT12 repräsentiert vorzugsweise ein sogenanntes Multiple Instance Learning.

Das Prozessierungsergebnis PE1 ist vorzugsweise gegeben durch zwei Größen: erstens einen Vektor

$$\vec{v_1} = [...]^N$$

der Dimensionalität N als ein sogenannter Encodierungsvektor als auch einem Skalarwert

$$\alpha_1$$

, welcher vorzugsweise in einem Wertebereich von 0-1 liegt.

Der Skalarwert $\alpha_1$ kann vorzugsweise eine Bedeutung des Vektors $\vec{v_1} = [...]^N$ indizieren. Vorzugsweise wird die Dimensionalität N des Vektors $\vec{v_1} = [...]^N$ zu dem Wert N=128 gewählt.

Ein entsprechendes Prozessierungsergebnis PE12 weist dann ebenfalls einen Vektor

$$\vec{v_{12}} = [...]^N$$

als auch einen Skalarwert

$$\alpha_{12}$$

in entsprechender Weise auf.

In einem Beispiel, in welchem aus einem Gradientenbild zwölf Gradiententeilbilder extrahiert werden, sodass zwölf Teilbild-Tupel jeweils separat prozessiert werden, sei jedes Gradientenbild und auch jedes Tupel sowie jedes Prozessierungsergebnis mit einem entsprechenden Index p=1...P gegeben mit P=12.

Der unter Bezug auf die Figur 7 dargestellte Schritt SF4 zur Verarbeitung der jeweiligen Prozessierungsergebnisse PE1, ..., PE12 zum Zwecke der Bestimmung des Fokussierungsmaßes FM wird nun in einer bevorzugten Ausführungsweise weiter detailliert dargelegt.

In einem Fusionsschritt FS erfolgt eine Superposition der Prozessierungsergebnisse gemäß

$$\vec{v_F} = \sum_{p=1}^{P} \alpha_p \cdot \vec{v_p}$$

Es kann dann in einem Schritt MM1 eine Multiplikation des Prozessierungs- bzw. Fusionsergebnisses

$$\vec{v_F} = \sum_{p=1}^{P} \alpha_p \cdot \vec{v_p}$$ erfolgen durch Multiplikation von $\vec{v_F}$ mit einer Matrix $W_1$.

In einem folgenden Verarbeitungsschritt RECS kann eine rect-Funktion auf die sich ergebenden Werte angewendet werden.

In einem weiteren Schritt MM2 kann wiederum eine Multiplikation mit einer Matrix $W_2$ erfolgen, was zu einem Skalarwert FMP führen kann. Dieser Skalarwert FMP kann dann durch Anwendung einer Sigmoidfunktion in einem Schritt SIM so zur Gewinnung des Fokussierungsmaß FM prozessiert werden, dass das Fokussierungsmaß in einem Wertebereich von 0 bis 1 liegt.

Die Figur 10A zeigt eine vorgeschlagene Recheneinheit gemäß einer bevorzugten Ausführungsform. Die Recheneinheit RE weist eine Datenschnittstelle SN auf, welche ausgebildet ist zum Entgegennehmen eines Mikroskopenbildes. Die Recheneinheit RE ist ferner ausgebildet zum Bestimmen eines Gradientenbildes auf Basis des Mikroskopbildes MB sowie zum Prozessieren von Bildinformationen des Gradientenbildes und des Mikroskopbildes mittels eines neuronalen Netzes zur Bestimmung des Fokussierungsmaßes.

Die Figur 10B zeigt eine bevorzugte Ausführungsform einer Datennetzwerkvorrichtung DV, welche eine Datenschnittstelle DSN zum Entgegennehmen eines Mikroskopbildes MB aufweist. Die Datennetzwerkvorrichtung DV weist eine Recheneinheit RE auf.

Vorgeschlagen wird ferner gemäß der Figur 10C ein Computerprogrammprodukt, umfassend Befehle, die bei der Ausführung des Computerprogrammproduktes durch einen Computer diesen veranlassen, ein Verfahren durchzuführen aufweisend: Entgegennehmen eines Mikroskopbildes, welches ein Bild eines biologischen Zellsubstrates repräsentiert, Bestimmen eines Gradientenbildes auf Basis des Mikroskopbildes sowie Prozessieren von Bildinformationen des Gradientenbildes und Bildinformationen des Mikroskopbildes mittels eines neuronalen Netzes zur Bestimmung eines Fokussierungsmaßes, wobei das Fokussierungsmaß eine Qualität einer Fokussierung in dem Mikroskopbild bezüglich einer Zellsubstratebene des Zellsubstrates indiziert.

Vorgeschlagen wird gemäß der Figur 10D ferner ein Datenträgersignal DS, welches das Computerprogrammprodukt CPP überträgt.

Die in der vorstehenden Beschreibung, den Ansprüchen und den Zeichnungen offenbarten Merkmale können sowohl einzeln als auch in beliebiger Kombination für die Verwirklichung von Ausführungsbeispielen in ihren verschiedenen Ausgestaltungen von Bedeutung sein und - soweit sich nicht aus der Beschreibung etwas anderes ergibt - beliebig miteinander kombiniert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente, wie insbesondere eine Recheneinheit, kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikro-prozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß eines Ausführungsbeispiels kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch Schreiben in eine oder mehrere Speicherstellen eine Aktion bewirken, veranlassen oder durchführen sowie andere Geräte, Maschinen und Komponenten ansteuern.

Ergebnisse

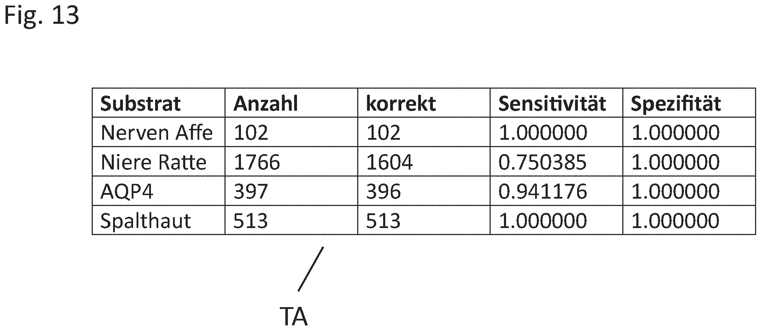

Die Figur 13 zeigt für unterschiedliche Substrate unterschiedliche Prozessierungsergebnisse. Die Ergebnisse sind dargestellt in der Tabelle TA. Trainiert wurden neuronale Netze anhand von Immunfluoreszenzbildern.

Für ein biologisches Substrat in Form von Nerven eines Affen wurden 102 Testbilder hinsichtlich einer Qualität einer Fokussierung der Mikroskopbilder bzw. Immunfluoreszenzbilder evaluiert. Hierbei wurden alle 102 Bilder korrekt bezüglich einer vorliegenden Fokussierung oder aber einer nicht vorliegenden Fokussierung bewertet.

Als Sensitivitätsmaß wird hier dargestellt eine Auswertung in der Weise, dass die Sensitivität hoch ist, wenn unscharfe Bilder bzw. schlecht produzierte Bilder auch wirklich als schlechte Fokussierung erkannt wurden. Die Sensitivität liegt hierbei für dieses Substrat bei 1,0.

Als Spezifität werden hier dargelegt Fälle, in welchen scharfe Bilder bzw. fokussierte Bilder auch als fokussiert bzw. scharf erkannt wurden. Die Spezifität liegt hierbei für dieses Substrat bei 1,0.

Für biologische Substrate, welche eine Niere einer Ratte zeigen in einem Immunfluoreszenzbild, wurden 1766 Testbilder ausgewertet als Immunfluoreszenzbilder bzw. Mikroskopbilder. Hierbei wurden 1604 Bilder korrekt bewertet. Die Sensitivität lag hierbei bei 0,750385 und die Spezifität bei 1,0.

Für biologische Substrate aufweisend das Protein Aquaporin-4 wurden 397 Immunfluoreszenzbilder ausgewertet, wobei 396 dieser Bilder korrekt bewertet wurden. Die Sensitivität betrug hierbei 0,941176. Die Spezifität betrug hierbei 1,0.

Für biologische Substrate zeigend eine Spalthaut wurden 513 Testbilder analysiert, welche alle 513 korrekt bewertet wurden, sodass die Sensitivität und die Spezifität jeweils auf 1,0 lagen.

## Patentansprüche

1. Verfahren zur Bestimmung eines Fokussierungsmaßes eines Mikroskopbildes, wobei das Mikroskopbild (MB) ein Bild eines biologischen Zellsubstrates repräsentiert, das Verfahren aufweisend

   - Bereitstellen des Mikroskopbildes (MB),
   - Bestimmen eines Gradientenbildes (GB) auf Basis des Mikroskopbildes (MB),
   - Prozessieren von Bildinformationen (GBI) des Gradientenbildes (GB) und von Bildinformationen (MBI) des Mikroskopbildes (MB) mittels eines neuronalen Netzes (NN) zur Bestimmung des Fokussierungsmaßes (FM), wobei das Fokussierungsmaß (FM) eine Qualität einer Fokussierung in dem Mikroskopbild (MB) bezüglich einer Zellsubstratebene (ZSE) des Zellsubstrates (SU) indiziert.

2. Verfahren nach Anspruch 2,
   ferner aufweisend

   - Identifizieren mehrerer Gradienten-Teilbilder (GT) des Gradientenbildes (GB),
   - Identifizieren mehrerer Mikroskop-Teilbilder (MT) des Mikroskopbildes (MB) auf Basis der Gradienten-Teilbilder (GT), wobei ein jeweiliges Mikroskop-Teilbild (MT1) des Mikroskobildes (MB) zu einem jeweiligen Gradienten-Teilbild (GT1) des Gradientenbildes (GB) korrespondiert,
   - Prozessieren der Gradienten-Teilbilder (GT) und der Mikroskop-Teilbilder (MT) mittels eines neuronalen Netzes (NN) zur Bestimmung des Fokussierungsmaßes (FM).

3. Verfahren nach Anspruch 1,
   ferner aufweisend

   - Identifizieren mehrerer Gradienten-Teilbilder (GT) des Gradientenbildes (GB) mittels Identifizieren von mehreren Bildpositionen (BP) in dem Gradientenbild (GB), welche eine hohe Gradientenpräsenz indizieren.

4. Verfahren nach Anspruch 2,
   ferner aufweisend

   - Aufteilen des Gradientenbildes (GB) in eine Menge von Gradientenbildbereichen (GBB) nach einem vorgegebenen Aufteilungsschema,
   - Identifizieren der mehreren Gradienten-Teilbilder (GT) des Gradientenbildes (GB) auf Basis der Gradientenbildbereiche (GBB).

5. Verfahren nach Anspruch 1,
   ferner aufweisend
   jeweiliges Prozessieren jeweiliger Teilbild-Tupel (TT) durch das neuronale Netz (NN), wobei ein jeweiliges Teilbild-Tupel (TT1) ein jeweiliges Gradienten-Teilbild (GT1) und ein dazu korrespondierendes, jeweiliges Mikroskop-Teilbild (MT1) aufweist.

6. Verfahren nach Anspruch 5,
   wobei das Fokussierungsmaß (FM) auf Basis der jeweiligen Prozessierungsergebnisse (PE) der jeweiligen Prozessierung der jeweiligen Teilbild-Tupel (TT) bestimmt wird.

7. Verfahren nach Anspruch 1,
   ferner aufweisend

   - Bestimmen eines adaptierten Mikroskopbildes (AMB) auf Basis des Mikroskopbildes (MB),
   - Prozessieren von Bildinformationen (GBI) des Gradientenbildes (GB), Bildinformationen (MBI) des Mikroskopbildes (MB) und Bildinformationen des adaptierten Mikroskopbildes (AMB) mittels eines neuronalen Netzes (NN) zur Bestimmung des Fokussierungsmaßes (FM), wobei das Fokussierungsmaß eine Qualität einer Fokussierung in dem Mikroskopbild bezüglich einer Zellsubstratebene des Zellsubstrates indiziert.

8. Verfahren nach Anspruch 1,
   wobei das Mikroskobild (MB) ein Fluoreszenzbild, insbesondere ein Immunfluoreszenzbild, des biologischen Zellsustrates (SU) oder ein Auflichtbild des biologischen Zellsubtrates (SU) ist.

9. Verfahren nach Anspruch 1,
   wobei das biologische Zellsubstrat (SU) ein Organschnitt oder ein Zellausstrich von biologischen Zellen ist.

10. Recheneinheit (RE), welche ausgebildet ist zum

- Entgegennehmen eines Mikroskopbildes (MB), welches ein Bild eines biologischen Zellsubstrates repräsentiert,
- ferner zum Bestimmen eines Gradientenbildes (GB) auf Basis des Mikroskopbildes (MB),
- sowie Prozessieren von Bildinformationen (GBI) des Gradientenbildes (GB) und Bildinformationen (MBI) des Mikroskopbildes (MB) mittels eines neuronalen Netzes (NN) zur Bestimmung eines Fokussierungsmaßes (FM), wobei das Fokussierungsmaß eine Qualität einer Fokussierung in dem Mikroskopbild bezüglich einer Zellsubstratebene des Zellsubstrates indiziert.

11. Datennetzwerkvorrichtung (DV),

aufweisend eine Datenschnittstelle (DSN) zum Entgegennehmen eines Mikroskopbildes (MB), welches ein Bild eines biologischen Zellsubstrates repräsentiert,
**gekennzeichnet durch** eine Recheneinheit (RE) nach Anspruch 10.

12. Computerprogrammprodukt,
umfassend Befehle, die bei der Ausführung des Computerprogrammproduktes (CPP) durch einen Computer diesen veranlassen, ein Verfahren durchzuführen aufweisend

- Entgegennehmen eines Mikroskopbildes (MB), welches ein Bild eines biologischen Zellsubstrates repräsentiert,
- Bestimmen eines Gradientenbildes (GB) auf Basis des Mikroskopbildes (MB),
- Prozessieren von Bildinformationen (GBI) des Gradientenbildes (GB) und Bildinformationen (MBI) des Mikroskopbildes (MB) mittels eines neuronalen Netzes (NN) zur Bestimmung eines Fokussierungsmaßes (FM), wobei das Fokussierungsmaß eine Qualität einer Fokussierung in dem Mikroskopbild (MB) bezüglich einer Zellsubstratebene (ZSE) des Zellsubstrates (ZU) indiziert.

13. Datenträgersignal (DS), welches das Computerprogrammprodukt (CPP) nach Anspruch 12 überträgt.

# Fig. 1

# Fig. 2

Fig.3

MB1

MB2

TBB1

TBB2

Fig. 4

GB

MB

S31

GT,GT1    GT,GT2

S32

MT,MT1    MT,MT2

NN    S41

FM

Fig. 5

GB

S311

BP,BP1    BP,BP2

S312

GT,GT1    GT,GT2

## Fig. 6a

GBB,GBB1

GBB,GBB2

GBB,GBB4

GB

GBB,GBB12

## Fig. 6b

GB

S3111

GBB,GBB1

GBB,GBB12

S3112

BP,BP1

BP,BP12

S321

GT,GT1

GT,GT12

Fig. 7

Fig. 8

Fig. 9

TT1X

GT1      AT1

MT1      • • •

TT12X

GT12      AT12

MT12

S411X      NN1      • • •      NN1      S4112X

PE1X      • • •      PE12X

S4FX

FM

Fig. 10a

MB      SN      RE

Fig. 10b

MB      DSN      RE      DV

Fig. 10c

CPP

Fig. 10d

DS      CPP

## Fig. 11

TT1

TT2

GT1 — [ ] [ ] — MT1

• • •

[ ] [ ] — MT12

GT12 —

SF411 — [ $\underline{NN}$ ]

• • •

[ $\underline{NN}$ ] — SF4112

PE1 — [ $\overrightarrow{V_1}, \alpha_1$ ]

• • •

[ $\overrightarrow{V_{12}}, \alpha_2$ ] — PE12

[ $\underline{FS}$ ]

[ $\overrightarrow{V_F}$ ]

[ $\underline{MM1}$ ]

[ $\underline{RECS}$ ]

S4F

[ $\underline{MM2}$ ]

FMP

[ $\underline{SIM}$ ]

FM

# Fig. 12

Fig. 13

EP 4 625 019 A1

| Substrat | Anzahl | korrekt | Sensitivität | Spezifität |
|----------|--------|---------|--------------|------------|
| Nerven Affe | 102 | 102 | 1.000000 | 1.000000 |
| Niere Ratte | 1766 | 1604 | 0.750385 | 1.000000 |
| AQP4 | 397 | 396 | 0.941176 | 1.000000 |
| Spalthaut | 513 | 513 | 1.000000 | 1.000000 |

TA

Fig.14

Europäisches Patentamt
European Patent Office
Office européen des brevets

# EUROPÄISCHER RECHERCHENBERICHT

**Nummer der Anmeldung**

EP 24 16 6441

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2018/045031 A1 (MEMORIAL SLOAN KETTERING CANCER CENTER [US]) 8. März 2018 (2018-03-08) | 1-13 | INV. G02B7/36 G06T7/00 |
| Y | * Absätze [0002], [0071] - [0097], [0039]; Abbildungen 1C, 1D, 2, 3, 4A-4D, 12 * | 3 | ADD. G02B21/24 G06N3/02 |
| | ----- | | |
| X | CN 111 007 661 B (HUNAN GUOKE ZHITONG TECH CO LTD) 22. Februar 2022 (2022-02-22) | 1-13 | |
| Y | * Absätze [0029] - [0058]; Anspruch 9; Abbildungen 1, 2 * | 3 | |
| | ----- | | |
| A | ZHOU YANG ET AL: "Gradient-based multi-focus image fusion method using convolution neural network", COMPUTERS & ELECTRICAL ENGINEERING, PERGAMON PRESS, GB, Bd. 92, 10. Mai 2021 (2021-05-10), XP086604072, ISSN: 0045-7906, DOI: 10.1016/J.COMPELECENG.2021.107174 [gefunden am 2021-05-10] * Abschnitt "2.3 Training based on transfer learning" * | 2,4 | RECHERCHIERTE SACHGEBIETE (IPC) G02B G06T G06N |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 11. September 2024 | Kaiser, Peter |

Europäisches
Patentamt

European
Patent Office

Office européen
des brevets

# EUROPÄISCHER RECHERCHENBERICHT

**Nummer der Anmeldung**

EP 24 16 6441

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Kouadri Mostefaoui Ghita ET AL: "Review of Artifact Detection Methods for Automated Analysis and Diagnosis in Digital Pathology" In: "Artificial Intelligence for Disease Diagnosis and Prognosis in Smart Healthcare", 17. Februar 2023 (2023-02-17), CRC Press, XP093204129, Seiten 177-202, DOI: 10.1201/9781003251903-11, * Seite 197, letzter Absatz; Abschnitt "11.2.2 Molecular Image Analysis" * | 2,4,8 | |
| | ----- | | |
| A | SAMUELJ YANG ET AL: "Assessing microscope image focus quality with deep learning", BMC BIOINFORMATICS, BIOMED CENTRAL LTD, LONDON, UK, Bd. 19, Nr. 1, 15. März 2018 (2018-03-15), Seiten 1-9, XP021254534, DOI: 10.1186/S12859-018-2087-4 * Zusammenfassung; Abb. 2 * | 2,4 | RECHERCHIERTE SACHGEBIETE (IPC) |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 11. September 2024 | Kaiser, Peter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

**Nummer der Anmeldung**

EP 24 16 6441

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CHALFOUN J. ET AL: "Empirical gradient threshold technique for automated segmentation across image modalities and cell lines", JOURNAL OF MICROSCOPY, Bd. 260, Nr. 1, 5. Juni 2015 (2015-06-05), Seiten 86-99, XP093204257, GB ISSN: 0022-2720, DOI: 10.1111/jmi.12269 Gefunden im Internet: URL:https://api.wiley.com/onlinelibrary/tdm/v1/articles/10.1111%2Fjmi.12269> * Abschnitt "Summary"; S. 91, Absatz überbrückend linke und rechte Spalte * | 3 | |
| | ----- | | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 11. September 2024 | Kaiser, Peter |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 16 6441

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-09-2024

| Im Recherchenbericht angeführtes Patentdokument | Datum der Veröffentlichung | Mitglied(er) der Patentfamilie | Datum der Veröffentlichung |
|---|---|---|---|
| WO 2018045031 A1 | 08-03-2018 | US 2019197362 A1 | 27-06-2019 |
| | | US 2021295111 A1 | 23-09-2021 |
| | | US 2023410460 A1 | 21-12-2023 |
| | | WO 2018045031 A1 | 08-03-2018 |
| CN 111007661 B | 22-02-2022 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 4016082 A1
- EP 3971827 A1
- EP 3642660 A1
- EP 3671309 A1